(19) **Europäisches Patentamt / European Patent Office / Office européen des brevets**

(11) **EP 1 433 068 B1**

(12) **FASCICULE DE BREVET EUROPEEN**

(45) Date de publication et mention
de la délivrance du brevet:
**08.12.2010   Bulletin 2010/49**

(21) Numéro de dépôt: **02781381.5**

(22) Date de dépôt: **23.09.2002**

(51) Int Cl.:
*G06F 13/16* $^{(2006.01)}$     *G06F 9/46* $^{(2006.01)}$

(86) Numéro de dépôt international:
**PCT/FR2002/003241**

(87) Numéro de publication internationale:
**WO 2003/027868 (03.04.2003 Gazette 2003/14)**

(54) **DISPOSITIF DE GESTION PARTAGEE**

VORRICHTUNG ZUR VERTEILTEN VERWALTUNG

SHARED MANAGEMENT DEVICE

(84) Etats contractants désignés:
**AT BE BG CH CY CZ DE DK EE ES FI FR GB GR IE IT LI LU MC NL PT SE SK TR**

(30) Priorité:  **27.09.2001  FR 0112440**

(43) Date de publication de la demande:
**30.06.2004   Bulletin 2004/27**

(73) Titulaire: **Streamcore System**
**92800 Puteaux (FR)**

(72) Inventeurs:
• **DESPRES, Rémi**
**F-92300 Levallois-Perret (FR)**
• **LUCET, Rémi**
**F-78570 Andresy (FR)**

(74) Mandataire: **Hirsch & Associés**
**58, avenue Marceau**
**75008 Paris (FR)**

(56) Documents cités:
**EP-A- 1 081 597    WO-A-99/28828**

**Description**

L'invention concerne une attribution de ressource informatique ou de télécommunication partagée entre plusieurs utilisateurs. De façon particulière, elle concerne un dispositif de gestion permettant d'attribuer une ressource à chaque utilisateur.

A chaque instant déterminé, ce dispositif sélectionne un utilisateur parmi l'ensemble des utilisateurs demandant une attribution de ressource. Cette sélection s'effectue suivant notamment la valeur d'une échéance (ou attente) associée à chaque utilisateur. En pratique, à chaque utilisateur sélectionné, la ressource est attribuée suivant une quantité de services prédéterminée. Chaque quantité de services prédéterminée est comprise dans une tranche de services limités (temps de traitement partagé ou transmission par paquets).

Dans la technique antérieure de EP 98 955 731.9, le dispositif est apte à regrouper les utilisateurs par classes comprenant chacune une mémoire du type FIFO (First In First Out). Ainsi, chaque classe est déterminée suivant un critère de classe correspondant à une valeur de couple standard "paramètre-part, quantité de services maximale". Chaque utilisateur a une priorité sur la ressource qui est représentée par le "paramètre part", aussi qualifiée de "quote-part". Dans une autre technique plus évoluée, la classe attribuée à chaque utilisateur correspond à un couple "paramètre-part, quantité de services maximale" correspondant à une valeur prédéterminée.

Seuls les premiers utilisateurs en tête de FIFO sont susceptibles d'être sélectionnés par le dispositif. Les utilisateurs en tête de FIFO correspondent aux utilisateurs dont l'échéance est la moins avancée. Dans ces solutions, le temps de traitement de sélection reste indépendant du nombre de connexions.

Toutefois, ces solutions ne proposent pas à l'utilisateur ni d'obtenir une quantité de services variable suivant ses besoins, ni de pouvoir faire varier le "paramètre-part".

L'invention vise notamment à améliorer la situation.

Elle propose à cet effet une structure de mémoires FIFO regroupées en différentes classes de telle sorte que l'utilisateur peut faire varier, suivant certaines conditions, sa quantité de services et son "paramètre-part".

L'invention propose un ordonnanceur pour le partage d'une ressource, du type comprenant:

- une mémoire capable de stocker, pour des utilisateurs, des quantités d'ordre respectives, dites échéances,
- des mémoires de type FIFO, associées chacune à une valeur, dite première valeur d'incrément, pour stocker des identifiants-utilisateur, et
- un organe de gestion, capable:

  * de désigner l'une des mémoires FIFO, dont l'identifiant-utilisateur premier sortant est le "prochain à servir" par la ressource, cette désignation s'effectuant en fonction de premières conditions qui comprennent l'ordre des échéances des utilisateurs premiers sortants,
  * de recycler l'identifiant-utilisateur dans l'une des FIFO, et
  * d'augmenter l'échéance d'un utilisateur recyclé de la première valeur d'incrément de la FIFO où se trouve cet utilisateur.

De façon à répondre au mieux aux besoins de services des utilisateurs,

- l'une au moins des mémoires FIFO est associée en outre à une seconde valeur d'incrément, et
- l'organe de gestion comprend un organe de décision de recyclage, capable, après service d'un utilisateur, de ré-orienter l'identifiant de cet utilisateur vers l'une des FIFO, en fonction de secondes conditions, qui comprennent une comparaison entre la seconde valeur d'incrément de la FIFO où va l'utilisateur et la première valeur d'incrément de la FIFO d'où provient l'utilisateur.

L'invention propose un procédé d'ordonnancement pour le partage d'une ressource comprenant les étapes suivantes:

a. stocker des identifiants-utilisateur dans des mémoires FIFO associées chacune à une valeur, dite première valeur d'incrément, l'une au moins des mémoires FIFO étant associée en outre à une seconde valeur d'incrément,
b. désigner, parmi lesdites mémoires FIFO, une mémoire FIFO dont l'identifiant-utilisateur premier sortant est le "prochain à servir" par la ressource, cette désignation s'effectuant en fonction de premières conditions qui comprennent l'ordre des échéances des utilisateurs premiers sortants,
c. recycler l'identifiant-utilisateur en ré-orientant cet identifiant-utilisateur dans l'une des FIFO, en fonction de secondes conditions, qui comprennent une comparaison entre la seconde valeur d'incrément de la FIFO où va l'utilisateur et la première valeur d'incrément de la FIFO d'où provient l'utilisateur, et
d. augmenter l'échéance d'un utilisateur recyclé de la première valeur d'incrément de la FIFO où se trouve cet utilisateur.

L'invention couvre un module logiciel, qui peut être défini comme comprenant les fonctions pour exécuter les étapes du procédé a. à d. ci-dessus, et/ou comme comprenant les fonctions de l'ordonnanceur défini ci-dessus.

L'invention couvre également un système informatique qui peut être défini comme comprenant l'ordonnanceur défini ci-dessus. Le système informatique comprend en outre un équipement de télécommunication.

- la figure 1 illustre schématiquement des interactions entre la ressource, le dispositif-gestionnaire de la ressource et N utilisateurs $u_1$, $u_2$ ....$u_N$ (entités utilisatrices),

- la figure 2 illustre schématiquement les interactions entre différents éléments que comporte le dispositif et les N entités utilisatrices,

- la figure 3 représente schématiquement les attributs d'un utilisateur u quelconque,

- la figure 4 représente schématiquement la mémoire de travail du dispositif,

- la figure 5 représente un ordinogramme de l'initialisation du gestionnaire selon l'invention,

- la figure 6 représente un ordinogramme définissant, pour une valeur donnée de "paramètre-part" d'un utilisateur, les quantités de services attribuables à cet utilisateur, et les classes de délai associées,

- la figure 7 représente un ordinogramme d'activation d'un utilisateur selon l'invention,

- la figure 8 représente un ordinogramme de sélection du prochain utilisateur selon l'invention,

- la figure 9 représente un ordinogramme complétant la figure 8.

En annexe 1 sont définies des formules du domaine de l'invention.

Les dessins et annexe contiennent, pour l'essentiel, des éléments de caractère certain. Ils pourront donc non seulement servir à mieux faire comprendre la description, mais aussi contribuer à la définition de l'invention, le cas échéant.

Le présent document peut contenir des éléments susceptibles d'une protection par droit d'auteur ou copyright. Le titulaire des droits n'a pas d'objection à la reproduction à l'identique par quiconque de ce document de brevet, tel qu'il apparaît dans les dossiers et/ou publications des offices de brevet. Par contre, il réserve pour le reste l'intégralité de ses droits d'auteur et/ou de copyright.

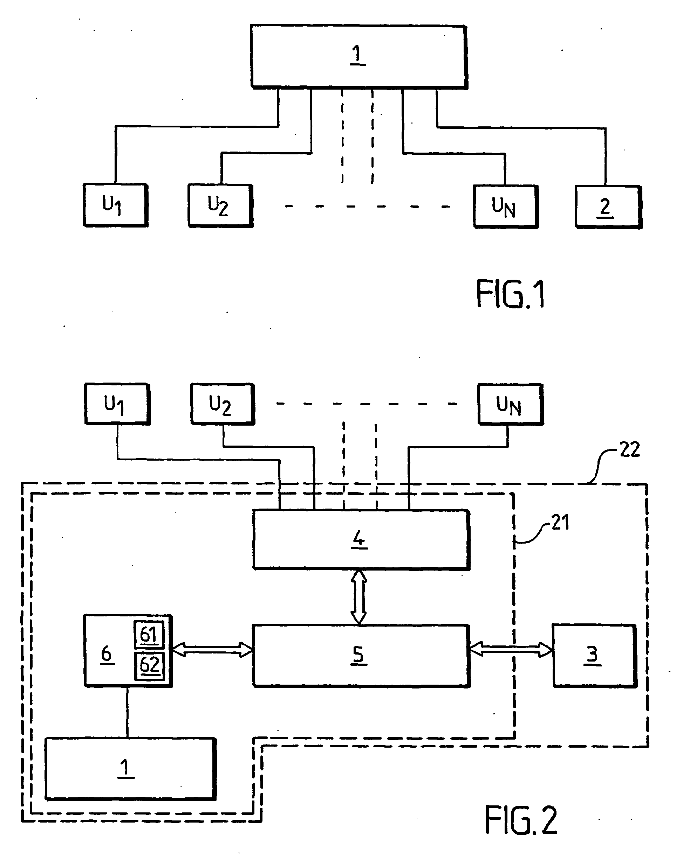

On se réfère tout d'abord à la figure 1 comprenant une ressource 1 telle qu'une liaison de transmission de données ou une unité centrale de traitement, et partagée entre un nombre N d'entités utilisatrices, $u_1$,... $u_N$, par exemple entre N applications d'ordinateurs ou N communications dans des noeuds de réseaux. Un dispositif 2 pour gérer la ressource 1, affecte celle-ci par quantité de services à des entités utilisatrices successivement sélectionnées. Chaque attribution de service à une entité utilisatrice $u_x$ est faite pour une quantité de services choisie : le quantum $Q_x$ de cette attribution. L'entité utilisatrice peut consommer ou non la totalité de ce quantum.

Sur la figure 2, le dispositif de gestion de la ressource 2 de la figure 1 comprend une liaison entrée/sortie 4, par exemple un bus de communication avec les N entités utilisatrices. Il comprend également une mémoire de travail 3, où sont enregistrées notamment des données relatives aux entités utilisatrices $u_1$...$u_n$, ainsi qu'un moyen de liaison mémoire 5, par exemple une interface mémoire entre la liaison entrée/sortie 4 et la mémoire 3. Enfin, le dispositif décrit comprend un moyen de décision 6 (faisant partie, par exemple, d'une unité centrale de traitement) comprenant, selon l'invention, un organe de décision de pré-sélection 62 entre utilisateurs capable notamment de sélectionner l'une des entités pour que la ressource lui soit affectée et un organe de décision de recyclage 61 capable notamment de ré-orienter en mémoire, selon certaines conditions, une entité ayant été servie, comme décrit plus loin. L'ensemble constitué de la ressource 1, interface mémoire entre la liaison entrée/sortie 4, le moyen de liaison mémoire 5, et le moyen de décision 6 est appelé organe de gestion 21 travaillant en liaison avec la mémoire 3. L'ensemble formé par l'organe de gestion travaillant en liaison avec la mémoire 3 est désigné comme l'ordonnanceur 22.

Le dispositif propose une gestion partagée d'une ressource entre plusieurs utilisateurs. Pour ce faire, la ressource est attribuée successivement à chaque utilisateur suivant, par exemple, des quantités de services Q(u). Chaque quantité de services Q(u) (appelée aussi quantum) peut désigner une durée de services attribuée à un utilisateur. Ainsi, à une entité utilisatrice sélectionnée $u_s$, on attribue la durée de services $Q_s$ relative à l'exécution d'une tâche par la ressource. D'autre part, un autre paramètre est associé à chaque utilisateur, appelé "paramètre-part", enregistré dans la mémoire de travail 3. Ce "paramètre-part" est associé à chaque entité utilisatrice selon des critères externes au dispositif-gestionnaire de ressource 2.

Dans le cas d'une gestion en temps partagé, ces "paramètres-parts" (appelés aussi "charges") sont proportionnels à des vitesses moyennes d'exécution désirées pour chaque entité utilisatrice. Ainsi, afin de respecter une équité de partage entre les entités utilisatrices et de respecter au mieux les besoins de vitesse d'exécution désirés par chaque entité utilisatrice, le gestionnaire de ressource 2 doit attribuer à chaque entité utilisatrice $u_x$ des quantités de services $Q_x$, afin que, cumulées sur des durées quelconques, ces quantités de services $Q_x$ soient au mieux proportionnelles à la charge $W_x$ de l'entité utilisatrice $u_x$.

Ainsi, la charge de la ressource $\gamma(t)$ en fonction du temps t et pour N entités utilisatrices $u_1...u_N$, est définie par la relation (1), donnée en annexe 1 de la présente demande.

La technique antérieure est présentée dans le document suivant :

[1]- "Algorithme d'allocation d'une unité centrale pour calculateurs exploités en temps partagé" (R. Després et A. Bache, Annales des communications, p.19, 1972).

La Demanderesse propose un modèle pour la gestion de ressource en temps partagé qui s'applique sur un traitement en parallèle des entités utilisatrices. La ressource est allouée alternativement pour des tâches en cours d'exécution, réclamant un traitement équivalent à la possession complète de la ressource pendant un temps-quantum Q. Chaque tâche est ainsi exécutée d'autant moins vite que le nombre d'entités utilisatrices demanderesses est important. Pour chaque entité utilisatrice nouvellement demanderesse $u_x$, la date $d_x(t)$ de sa dernière demande de quantum $Q_x(t)$ à l'instant t est connue. A partir du quantum $Q_x(t)$, la date future $f_x(t)$ à laquelle le quantum $Q_x(t)$ sera totalement exécutée, peut être évaluée à condition de connaître la charge $\gamma(t)$ de la ressource évoluant dans le temps, tel que défini par la relation (2) de l'annexe 1.

Arbitrairement, il est défini une échelle de temps virtuel tel qu'à l'instant $t_0(t)$, la charge $\gamma(t)$ de la ressource est nulle à cet instant. Le quantum $q(t)$ est défini dans la relation (3) de l'annexe 1 suivant le temps virtuel $t_0(t)$. Ainsi, une échéance de fin d'exécution du quantum $Q_x(t)$ est estimée suivant la relation (4) ou (5) de l'annexe 1. Pour chaque entité utilisatrice $u_x$, cette échéance $E_x(t)$ progresse d'une valeur $Q_x/W_x$ à chaque exécution de demande de services de l'entité utilisatrice.

D'autre part, le gestionnaire de ressource 2 entretient une heure virtuelle V incrémentée, à chaque exécution de demande de services d'une entité utilisatrice sélectionnée $u_s$, d'une quantité $pV(u_s)$ telle que définie dans la relation (6) de l'annexe 1. Afin d'établir un ordre de priorité de satisfaction des demandes des entités utilisatrices, à chaque entité utilisatrice est associé un état d'éligibilité défini dans le document [1]. En plus de cet état d'éligibilité, une comparaison de l'échéance virtuelle de l'entité utilisatrice à l'heure virtuelle V du gestionnaire de ressources doit répondre à certains critères.

Le gestionnaire de ressources attribue alors un quantum $Q_x$ à l'entité utilisatrice $u_x$, éligible et d'échéance virtuelle la plus petite.

Cette technique présente un inconvénient majeur : le temps de traitement nécessaire au gestionnaire de ressources pour la sélection d'une entité utilisatrice est dépendant du nombre N d'entités utilisatrices.

La Demanderesse a alors proposé des solutions dans les documents suivants :

[2] "A packet switching network with graceful saturated operation" (R. Després, International Conference and Computer Communications, P. 345, 1972),

[3]- EP 98 955 731.9, "Dispositif d'une gestion de ressource entre plusieurs utilisateurs".

Ces documents proposent des solutions complémentaires s'appuyant sur une gestion d'un nombre limité de files d'entités utilisatrices. Ces files sont de type FIFO. Dans le document en référence [2], le gestionnaire de ressources impose aux entités utilisatrices des valeurs de couple standard "charge-quantum". Chaque FIFO correspond également à une valeur de couple standard "charge-quantum". A chaque FIFO correspond une échéance virtuelle et une progression d'échéance virtuelle ainsi qu'un état d'éligibilité. A un instant donné, pour la FIFO éligible dont l'échéance virtuelle est la plus petite, le gestionnaire de ressources attribue un quantum à l'entité en tête de FIFO.

Ainsi, le temps de traitement est indépendant du nombre d'entités utilisatrices et seulement dépendant du nombre de FIFO.

Toutefois, les valeurs de couple standard "charge-quantum" ne permettent pas d'assurer une équité de partage entre les entités utilisatrices.

Ainsi le document en référence [3] définit pour chaque FIFO une classe c associée à un délai d(c). Chaque entité utilisatrice est affectée à une classe telle que le quantum Q(u) maximal (ou attente maximale) désiré par cette entité utilisatrice corresponde au délai d(c) de cette classe telle que $Q_{max}(u) = d(c) \times W(u)$.

Ainsi, lorsque le gestionnaire de ressource sélectionne une entité utilisatrice u en tête d'une FIFO de délai d(c) et dont l'échéance virtuelle E(u) est la plus petite parmi celles des entités utilisatrices apparaissant en tête de leur FIFO, le gestionnaire de ressource attribue un quantum $Q(u)=d(c)\times W(u)$ à l'entité utilisatrice u sélectionnée.

L'échéance virtuelle de chaque entité utilisatrice progresse, après attribution du quantum Q(u) associé à la charge W(u), d'une quantité égale au délai de la classe dans laquelle se trouve l'entité utilisatrice u.

Le document en référence [3] propose également un mode de réalisation dans le cas d'un nombre variable d'entités utilisatrices. Dans ce cas, le gestionnaire de ressources distingue deux types de classes : une classe d'entités utilisatrices nouvellement demanderesses et une classe d'entités utilisatrices qui étaient déjà demanderesses avant la demande actuelle. Les échéances des entités utilisatrices nouvellement demanderesses sont alors déterminées à partir d'une variable interne du gestionnaire de ressources, de préférence à partir de l'heure virtuelle V.

Toutefois, la technique proposée dans le document en référence [3] ne satisfait pas une entité utilisatrice désirant changer de quantité de services Q et/ou de paramètre-part W au cours du temps. En pratique, dans le cas d'une gestion de transmission par paquet par exemple, un paquet de petite taille peut attendre aussi longtemps qu'un paquet de grande taille pour une même entité utilisatrice.

Pour des temps de traitement constants, le but de l'invention est d'atteindre les objectifs d'indépendance à la fois des charges des entités utilisatrices et des quanta des entités utilisatrices. De plus, chaque entité utilisatrice u peut demander un quantum Q et une charge W variables au cours du temps.

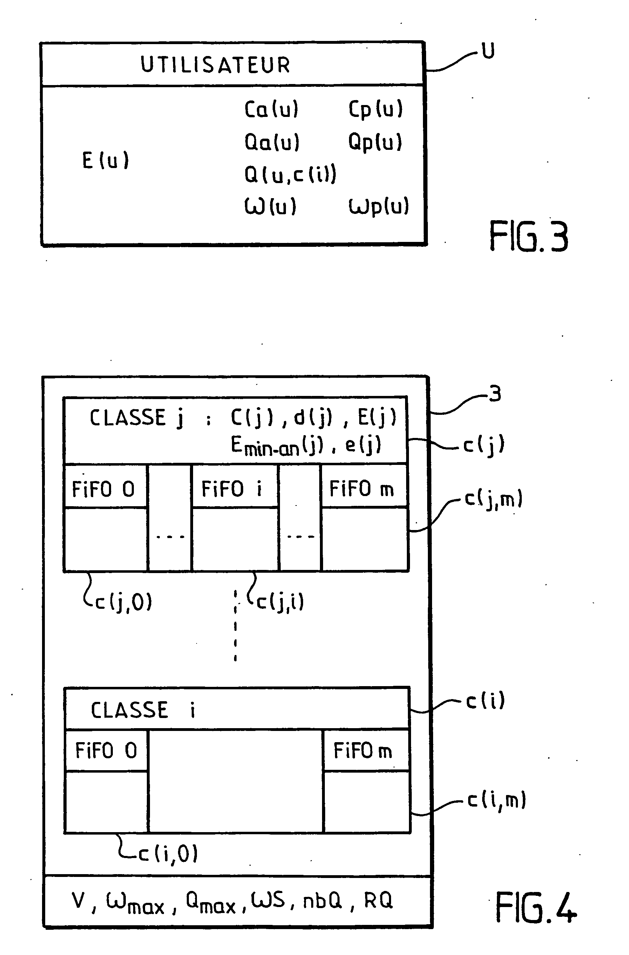

Le gestionnaire de ressources selon l'invention s'appuie sur une mémoire de travail 3 telle que représentée dans la figure 4.

Ainsi, la mémoire de travail 3 est partagée en plusieurs classes i, indexées de 1 à m, notées c(i). Les classes c(i) sont de délais respectifs d(i), ces classes c(i) sont également appelées classes de délai. Chaque entité utilisatrice u est affectée à la classe de délai c(i) telle que, pour une charge W(u) choisie par l'entité utilisatrice, le quantum Q(u), choisi selon des conditions déterminées, réponde à l'inégalité:

$$d(i) \leq Q(u)/W(u) < d(i+1).$$

L'entité utilisatrice est alors affectée à la classe de délai c(i). Dans le cas d'une nouvelle entité utilisatrice u, celle-ci est affectée à la file FIFO 0 de la classe c(i) (soit la file représentée par c(i,0)) correspondant à la file des nouveaux utilisateurs.

L'échéance virtuelle E(u) de l'entité utilisatrice est incrémentée du délai d(i) de la classe c(i) dans laquelle se trouve l'entité utilisatrice.

Après une première attribution de la ressource selon la charge W(u) et le quantum Q(u) choisis par l'entité utilisatrice, cette dernière peut effectuer une nouvelle demande d'attribution de la ressource suivant un nouveau quantum, appelé quantum actuel $Q_a(u)$, et/ou une nouvelle charge appelée charge actuelle $W_a(u)$. L'entité utilisatrice u est alors affectée à une nouvelle classe de délai c(j) telle que $d(j) \leq Q_a(u)/W_a(u) < d(j+1)$. L'entité utilisatrice u entre alors dans la file i, notée également c(j,i), correspondant, dans la classe c(j), à la file des anciens utilisateurs affectés précédemment à la classe c(i).

Ainsi, une file c(j,i) dépend du délai d(j), appelé également première valeur d'incrément de la classe c(j) et du délai d(i), appelé également deuxième valeur d'incrément de la classe c(i).

On comprendra que chaque classe, indexée de 1 à m, est constituée de m+1 files de type FIFO indexées de 0 à m. La file 0 (également notée c(j,0) dans la classe c(j)) correspond à la file des nouvelles entités utilisatrices et les files indexées de 1 à m correspondent aux files des anciennes entités utilisatrices des classes 1 à m.

Dans une réalisation possible, une entité utilisatrice est enregistrée dans une mémoire FIFO sous forme d'un identifiant-utilisateur pouvant être constitué d'attributs de l'entité utilisatrice.

Ainsi, pour chaque entité utilisatrice u, sont définis les attributs de la figure 3 comprenant des attributs variables dans le temps :

- Q(u,c(i)) la liste des quanta attribuables à l'utilisateur associés aux classes c(i), pour la charge du moment,
- $W_p(u)$, la charge précédente choisie de l'entité utilisatrice,
- $W_a(u)$, la charge actuelle choisie de l'entité utilisatrice,
- $Q_p(u)$, le quantum précédent de l'entité utilisatrice
- $Q_a(u)$ le quantum actuel de l'entité utilisatrice
- cp(u), la classe précédente correspondant à $W_p(u)$ et $Q_p(u)$,
- $c_a(u)$, la classe actuelle correspondant à $W_a(u)$ et $Q_a(u)$,
- E(u), l'échéance virtuelle de l'entité utilisatrice.

De même, dans la mémoire 3 de la figure 4, pour chaque classe c(j) est défini un certain nombre d'attributs comprenant:

un attribut fixe dans le temps :

- d(j), son délai,

des attributs variables dans le temps :

- e(j), son état d'éligibilité,
- E(j), son échéance virtuelle,
- $E_{min-an}$ (j), l'échéance minimale parmi les échéances d'anciens utilisateurs en tête de FIFO.

De même, le gestionnaire de ressource 2 définit plusieurs attributs dans la mémoire 3 de la figure 4 :

des attributs fixes dans le temps :

- $W_{max}$, la charge maximale attribuable à une entité utilisatrice,
- $Q_{max}$, le quantum maximal attribuable à une entité utilisatrice,
- nbQ, le nombre des divers quanta possibles attribuables à une entité utilisatrice après chaque affectation de la ressource,
- RQ, la progression géométrique des suites de quanta, attribuables à une entité utilisatrice,

des attributs variables dans le temps :

- V, l'heure virtuelle du dispositif,
- WS, la charge totale du dispositif correspondant à la somme des charges attribuées à chaque entité utilisatrice.

Dans la suite de la description, chaque paramètre est décrit dans son utilisation selon l'invention.

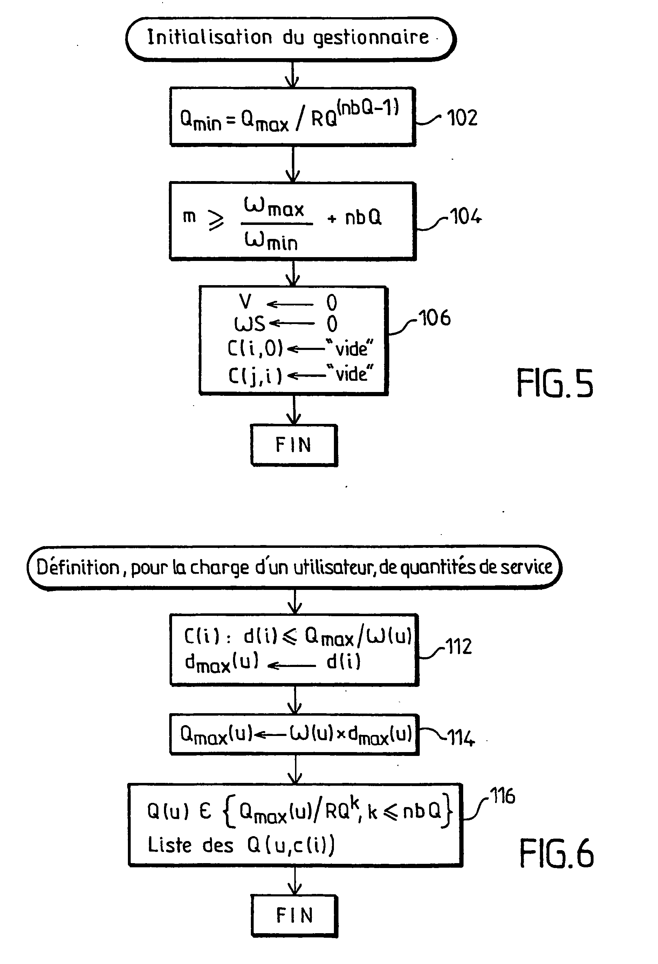

La figure 5 présente l'initialisation du gestionnaire de ressource selon l'invention.

Ainsi, selon l'étape 102, le quantum minimal attribuable à une entité utilisatrice est calculé suivant le quantum maximal $Q_{max}$ attribuable à une entité utilisatrice, la raison géométrique RQ des suites géométriques des quanta attribuables, et le nombre de quanta attribuables nbQ. A l'étape 104, le nombre de classes m, déterminant également le nombre m+1 de FIFO par classe, est un entier calculé en fonction du nombre de quanta attribuables nbQ et de l'entier correspondant au rapport $W_{max}/W_{min}$.

A l'étape 106, le gestionnaire de ressource initialise l'heure virtuelle V et la charge totale du gestionnaire WS à zéro. D'autre part, pour chacune des m classes c(i), le gestionnaire de ressource initialise à "vide" la file des nouveaux utilisateurs c(i,0) et les m files d'anciens utilisateurs c(j,i), j variant de 1 à m.

La figure 6 représente un ordinogramme illustrant la définition des quanta attribuables à un utilisateur donné pour une charge choisie de cet utilisateur.

A l'étape 112, il est recherché la classe c(i) de délai d(i) qui permet de ne pas dépasser le quantum maximal théoriquement attribuable $Q_{max}$ pour la charge W(u) choisie. Ce délai d(i) est mémorisé en tant que délai maximal $d_{max}$ (u) de l'utilisateur donné u.

A l'étape 114, le quantum maximal réellement attribuable à l'entité utilisatrice est calculé en fonction du délai maximal trouvé $d_{max}(u)$ telle que $Q_{max}(u)=W(u)\times d_{max}(u)$.

L'étape 116 définit les quanta que l'utilisateur pourra demander suivant ses besoins. Ces quanta attribuables Q(u) prennent différentes valeurs possibles telles $Q(u)=Q_{max}(u)/RQ^k$ avec $k \le nbQ$.

Ainsi, pour une charge W(u) fixée et associée à un quantum attribuable Q(u) correspond une classe c(i) de délai d(i)=Q(u)/W(u). Une liste Q(u, c(i)) de ces quanta attribuables est établie pour les différentes classes c(i).

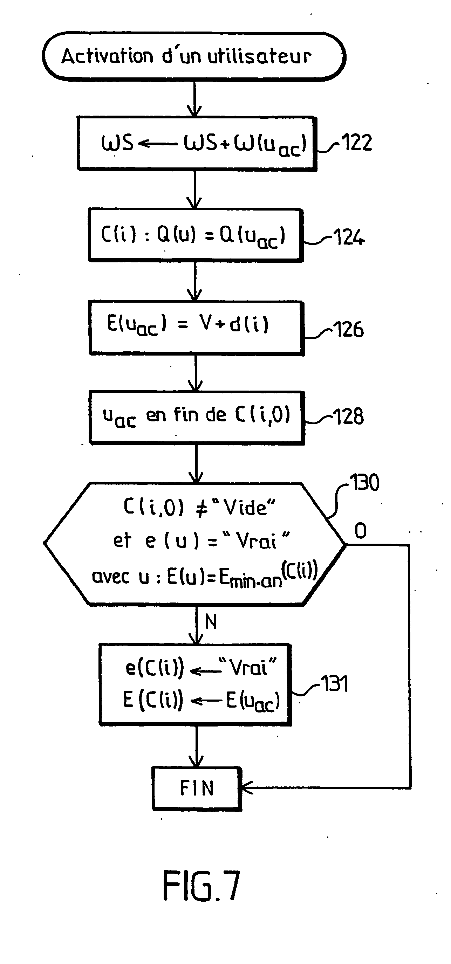

D'autre part, la figure 7 présente l'ordinogramme illustrant l'activation d'un nouvel utilisateur $u_{ac}$ de charge choisie $W(u_{ac})$. Ainsi, à l'étape 122, la charge totale du gestionnaire de ressource est incrémentée de la charge choisie de l'utilisateur activé. L'utilisateur activé demande un des quanta $Q(u_{ac})$ attribuables tels que définis à l'étape 116 de la figure 6. D'autre part, à l'étape 124, la classe c(i) est déduite de la recherche du délai d(i) vérifiant la relation $d(i) \le Q(u_{ac})/W(u_{ac}) < d(i+1)$. L'échéance de l'utilisateur activé est calculée à l'étape 126, $E(u_{ac})$ étant égale au délai de la classe ajouté à l'heure virtuelle V+d(i).

A l'étape 128, l'utilisateur activé $u_{ac}$ est inséré en fin de file c(i,0) des nouveaux utilisateurs de la classe c(i).

D'autre part, à l'étape 130, si la file de nouveaux utilisateurs de la classe c(i) est dite "vide" (ou encore sans utilisateur) et si l'utilisateur ancien d'échéance minimale de la classe (s'il en existe un) n'était pas déjà éligible, la classe devient éligible à l'étape 131. e(c(i)) prend la valeur "vraie" et l'échéance de l'utilisateur activé $E(u_{ac})$ devient l'échéance de la classe E(c(i)).

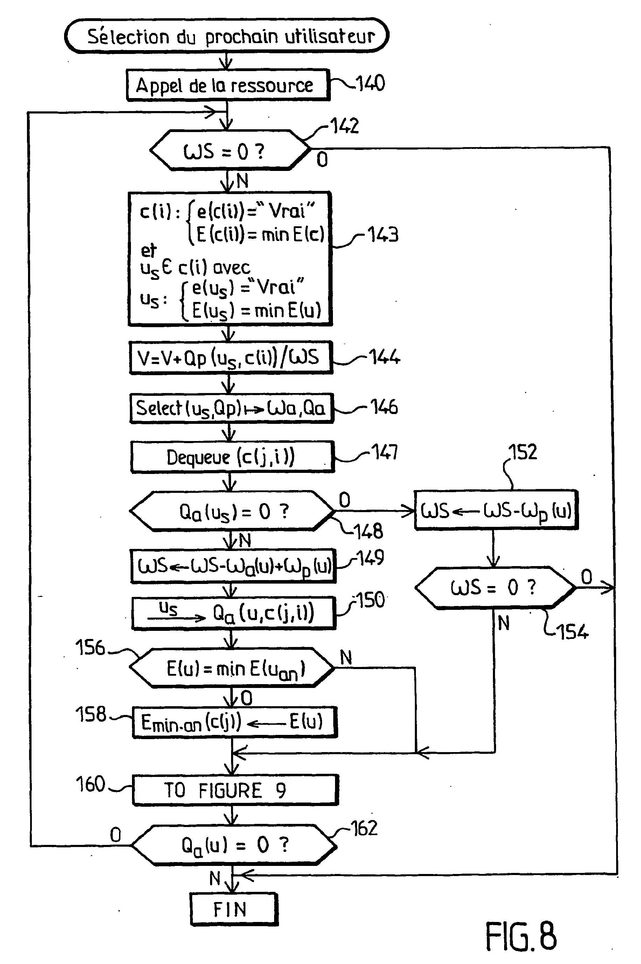

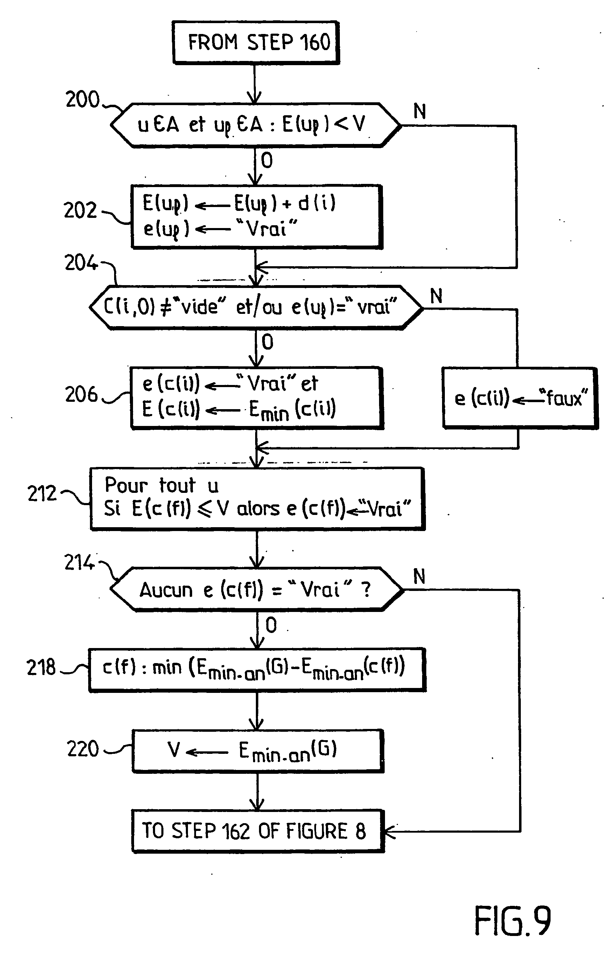

Les ordinogrammes des figures 8 et 9 représentent les algorithmes utilisés par le gestionnaire de ressources pour sélectionner un utilisateur. Ainsi, lors d'un appel de la ressource à l'étape 140, le gestionnaire de ressource vérifie si sa charge globale WS est nulle à l'étape 142. Dans le cas d'une charge globale nulle, l'appel de la ressource est sans effet pour un utilisateur. Sinon, le gestionnaire de ressource sélectionne l'utilisateur à qui il va attribuer la ressource à l'étape 143. Cette sélection s'effectue tout d'abord sur les m classes dont seule la classe dite "éligible" et d'échéance de classe $E(c(i))$ minimale et retenue. Ainsi, parmi les entités utilisatrices des files de cette classe sélectionnée, l'entité utilisatrice éligible et d'échéance $E(u)$ minimale est sélectionnée, appelée entité utilisatrice $u_s$, et ceci pour un quantum $Q_p(u_s,c(i))$. L'heure virtuelle du gestionnaire de ressource progresse d'une quantité égale au quantum servi divisé par la charge totale $Q_p(u_s,c(i))/WS$, à l'étape 144. A l'étape 146, l'utilisateur est informé de sa sélection et est invité à demander, s'il le désire, une nouvelle valeur de charge actuelle $W_a(u)$ (pour laquelle il devra réaliser un nouveau calcul des quanta attribuables et des classes de délai correspondant aux étapes 112 à 116 de la figure 6); et une nouvelle valeur de quantum $Q_a(u)$ choisi parmi ceux attribuables. L'utilisateur est alors sorti de sa FIFO $c(j,i)$ à l'étape 147.

A l'étape 148, dans le cas d'un quantum nul demandé par l'utilisateur, le gestionnaire de ressource diminue sa charge totale WS de la charge de l'utilisateur $w_p(u)$, à l'étape 152. Le gestionnaire de ressource vérifie qu'aucun utilisateur ne reste dans sa mémoire, à savoir que sa charge totale est nulle, à l'étape 154, et ainsi arrête l'attribution de la ressource à l'utilisateur. Si, au contraire, des utilisateurs restent dans la mémoire du gestionnaire de ressource, à l'étape 154, l'ordinogramme continue à l'étape 160 désignant la figure 9.

Si, à l'étape 148, le quantum demandé par l'utilisateur pour sa prochaine sélection n'est pas nul, la charge totale WS est alors éventuellement modifiée à l'étape 149 pour prendre en compte une modification de la charge individuelle de l'utilisateur sélectionné : $WS = WS-W_p(u)+W_a(u)$. A l'étape 150, l'utilisateur servi est inséré en fin d'une nouvelle FIFO d'anciens dans la classe de délai correspondant d'une part au quantum demandé pour sa prochaine sélection et d'autre part à sa charge fixée. Dans cette classe, l'utilisateur servi est inséré dans la FIFO d'anciens $c(j,i)$, correspondant à la classe précédente $c(i)$ dont il vient de sortir et à la classe actuelle $c(j)$.

Les étapes suivantes correspondent à des mises à jour des paramètres d'échéances des classes et des variables d'états d'éligibilité.

A l'étape 156, si, à l'intérieur de sa nouvelle classe, l'utilisateur réinséré devient celui dont l'échéance d'anciens est minimale, l'échéance minimale d'anciens de la classe $E_{min-an}(c(j))$ est mise à jour à l'étape 158. Sinon, l'étape 160 désignant la figure 9 est effectuée.

La figure 9 décrit les étapes précédant l'étape 162 de la figure 8.

A l'étape 200, si l'utilisateur u faisait partie de l'ensemble A désignant les utilisateurs anciens de la classe précédente $c(i)$ et s'il existe, en tête de la FIFO des utilisateurs anciens, un utilisateur $u_l$ d'échéance minimale $E(u_l)$, tel que $E(u_l)<V$, alors l'étape 202 est réalisée. L'échéance de l'utilisateur $u_l$ est incrémentée du délai $d(i)$ de la classe $c(i)$ et le paramètre d'état d'éligibilité de cet utilisateur $e(u_l)$ est passé à "vrai". Ainsi, dans l'ancienne classe de l'utilisateur servi, un autre utilisateur est rendu éligible avec une nouvelle échéance.

D'autre part, dans l'ancienne classe $c(i)$ de l'utilisateur servi, si la file de nouveaux utilisateurs de la classe n'est pas vide et/ou si l'utilisateur ancien d'échéance minimale $u_l$ est devenu éligible, à l'étape 204, la classe $c(i)$ devient éligible et l'échéance de cette classe $E(c(i))$ prend la valeur de la plus petite échéance trouvée, à l'étape 206. L'échéance minimale d'ancien utilisateur de la classe est mis à jour si nécessaire. Si les critères de l'étapes 204 ne sont pas remplis, la classe $c(i)$ est inéligible à l'étape 208.

La variable f est un entier variant de 1 à m.

A l'étape 212, le gestionnaire de ressource parcourt les m classes afin de rendre éligibles les classes inéligibles $c(f)$ dont l'échéance minimale $E(c(f))$ est dépassée par l'heure virtuelle V.

Si aucune classe n'est éligible, à l'étape 214, le gestionnaire de ressource trouve parmi les m classes, la classe dont l'échéance d'anciens est minimale à l'étape 218 et l'heure virtuelle V est avancée à l'échéance minimale d'anciens du gestionnaire de ressource à l'étape 220.

Après l'étape 220 ou si une classe est éligible à l'étape 214, l'étape 162 de la figure 8 vérifie si le quantum demandé par l'utilisateur est nul:

- dans le cas d'une réponse positive, l'algorithme reprend à l'étape 142,
- dans le cas d'une réponse négative, l'algorithme finit sur un état de non attribution de la ressource.

La présente invention vise entre autre le code logiciel qu'elle fait intervenir, tout particulièrement lorsqu'il est mis à disposition sur tout support lisible sur un ordinateur. L'expression "support lisible par ordinateur" couvre un support de stockage, par exemple magnétique ou optique, aussi bien qu'un moyen de transmission, tel qu'un signal numérique ou analogique.

L'invention vise également un système informatique comprenant l'ordonnanceur. Par système informatique, on entend un ou plusieurs ordinateurs, et/ou tout système numérique capable d'effectuer des télécommunications et/ou de la transmission de données.

Bien entendu l'invention n'est pas limitée à la forme de réalisation décrite précédemment à titre d'exemple, elle s'étend à d'autres variantes.

Ainsi, on comprendra que la présente invention peut s'appliquer à des dispositifs informatiques dont le système d'exploitation partage une unité centrale de traitement entre plusieurs tâches.

Elle peut aussi concerner des noeuds de réseaux à commutation par paquets (noeuds de réseaux type "internet" etc) qui partagent au moins une liaison de transmission de données entre plusieurs courants d'informations.

Dans l'exemple décrit ci-avant, l'allocation de la ressource se fait par temps de traitement fini (la gestion en temps partagé) adapté suivant la demande de chaque utilisateur. Cependant, l'invention s'applique aussi bien à une allocation par transmission par paquets (liaison de transmission) suivant également les besoins de chaque utilisateur, les quanta demandés étant définis alors comme des quantités d'informations à transmettre.

De manière générale, l'invention s'applique à des allocations par tranches de services pouvant varier au cours du temps selon les besoins des utilisateurs. Chaque allocation par tranche de services pour un utilisateur est associée à une file d'utilisateurs ayant eu l'allocation de la même tranche de services précédente. Dans une même classe, quelle que soit la file dans laquelle l'utilisateur se trouve en fonction de l'allocation de la tranche de services précédente, un incrément est défini pour la classe afin de compte un cumul pour chaque utilisateur représentatif des services rendus à cet utilisateur dans le temps.

D'autre part, le nombre de classes proposées selon l'invention peut être défini différemment.

L'invention peut s'exprimer sous la forme de produits industriels nouveaux que constituent les dispositifs de gestion d'une ressource de type précité. Elle peut aussi bien s'exprimer sous la forme du traitement appliqué à un ordinateur ou à un noeud de réseaux, pour gérer le partage de cette ressource.

La série de quanta successifs d'un même utilisateur qui reste actif peut être implicite. Par exemple, le premier quantum a la valeur minimale pour l'utilisateur et les suivants sont en progression géométrique de raison QR jusqu'à une stabilisation à la valeur maximale.

Le nombre de classes et le nombre des FIFO dans chaque classe étant limité, un matériel spécialisé pour exécuter les boucles les plus critiques est envisageable sans que sa dimension introduise une limite contraignante du nombre d'utilisateurs. Les boucles les plus critiques, exécutables à chaque sélection, concernent l'examen des classes inéligibles pour déterminer si leur échéance a été atteinte ou dépassée par l'heure virtuelle, la recherche d'une classe éligible d'échéance la moins avancée, et, pour le recalage éventuel de l'heure virtuel, la recherche de la classe inéligible d'échéance précédente la moins avancée.

Dans une réalisation particulière de l'invention, le nombre d'utilisateurs est fixé au départ, la gestion de nouveaux utilisateurs n'existe pas, les FIFO des nouveaux utilisateurs sont alors supprimées.

Dans une autre réalisation particulière de l'invention, la modification de la charge d'un utilisateur est limitée à un ensemble de valeurs en progression géométrique de même raison (RQ) que la suite des valeurs de quanta, de sorte que la liste des valeurs de quanta possibles pour cette nouvelle charge reste inchangée, seules les classes associées définissant des délais étant modifiées. Ceci minimise la quantité de calcul nécessaire.

Dans une réalisation possible de l'invention, les mémoires FIFO sont toutes associées à une première valeur d'incrément et une seule de ces mémoires FIFO est associée à une seconde valeur d'incrément correspondant à une première valeur d'incrément d'une des mémoires FIFO.

Annexe 1

$$(1) \quad : \quad \gamma(t) = \sum_{k=1}^{k=N} W(k)$$

$$(2) \quad : \quad Q_x(t) = \int_{d_x(t)}^{f_x(t)} d\tau / \gamma(\tau)$$

$$(3) \quad : \quad q(t) \; = \; \int_{t_0(t)}^{t} d\tau/\gamma(\tau)$$

$$(4) \quad : \quad E_x(t) \; = \; q(f_x(t))$$

$$(5) \quad : \quad E_x(t) \; = \; q(d(t)) \; + \; Q_x/W_x$$

$$(6) \quad : \quad pV(u_s) \; = \; Q(u_s) \Big/ \sum_{k=1}^{k=N} W(k)$$

## Revendications

1. Ordonnanceur pour le partage d'une ressource, du type comprenant :

- une mémoire capable de stocker, pour des utilisateurs, des quantités d'ordre respectives, dites échéances (E (u)),
- des mémoires de type FIFO, associées chacune à une valeur, dite première valeur d'incrément (d (j)), pour stocker des identifiants-utilisateur, et
- un organe de gestion (21), capable :

* de désigner l'une des mémoires FIFO, dont l'identifiant-utilisateur premier sortant est le "prochain à servir"par la ressource, cette désignation s'effectuant en fonction de premières conditions qui comprennent l'ordre des échéances des utilisateurs premiers sortants,
* de recycler l'identifiant-utilisateur dans l'une des FIFO, et
* d'augmenter l'échéance d'un utilisateur recyclé de la première valeur d'incrément de la FIFO où se trouve cet utilisateur,

caractérisé :
- **en ce que** l'une au moins des mémoires FIFO (c (j, i)) est associée en outre à une seconde valeur d'incrément (d (i)), et
- **en ce que** l'organe de gestion (21) comprend un organe de décision de recyclage (61), capable, après service d'un utilisateur, de ré-orienter l'identifiant de cet utilisateur vers l'une des FIFO, en fonction de secondes conditions, qui comprennent une comparaison entre la seconde valeur d'incrément de la FIFO où va l'utilisateur et la première valeur d'incrément de la FIFO d'où provient l'utilisateur.

2. Ordonnanceur selon la revendication 1, **caractérisé en ce qu'**il comprend au moins deux FIFO (c (j, l), c (j, i)) ayant la même première valeur d'incrément (d (j)) et **en ce que** l'organe de gestion (21) comprend un organe de pré-sélection (62) entre les utilisateurs premiers sortants de ces FIFO ayant la même première valeur d'incrément.

**3.** Ordonnanceur selon la revendication 2, **caractérisé en ce que** au moins deux des FIFO (c (j, l), c (j, i)) ayant la même première valeur d'incrément ont des secondes valeurs d'incrément (d (l), d (i)) différentes.

**4.** Ordonnanceur selon l'une des revendications 1 à 4, **caractérisé en ce que** les première conditions prédéterminées comprennent le fait de déterminer, pour chaque groupe de mémoires FIFO ayant la même première valeur d'incrément, une échéance minimale parmi les échéances (E (u)) des utilisateurs premiers sortants des mémoires FIFO ayant la même première valeur d'incrément et de désigner une mémoire FIFO correspondant d'une part à une échéance inférieure à une valeur globale (V) attribuée à l'ordonnanceur et d'autre part à l'échéance minimale parmi les échéances minimales des groupes de mémoires FIFO ayant la même première valeur d'incrément.

**5.** Ordonnanceur selon l'une des revendications 1 à 4, **caractérisé en ce que** les deuxième conditions prédéterminées comprennent la vérification de l'égalité entre la seconde valeur d'incrément de la FIFO où va l'utilisateur et la première valeur d'incrément de la FIFO d'où provient l'utilisateur.

**6.** Ordonnanceur selon l'une des revendications précédentes, **caractérisé en ce qu'**il comprend une FIFO spécifique (c (j, 0)) pour stocker un identifiant utilisateur entrant.

**7.** Ordonnanceur selon la revendication 6, **caractérisé en ce qu'**il comprend en outre un organe de décision d'entrée, capable de placer un identifiant utilisateur dans une mémoire FIFO, possédant une première valeur d'incrément qui correspond à un paramètre lié au besoin relatif de ressource par l'utilisateur entrant.

**8.** Procédé d'ordonnancement pour le partage d'une ressource, **caractérisé en ce qu'**il comprend les étapes suivantes :

a. stocker des identifiants-utilisateur dans des mémoires FIFO associées chacune à une valeur, dite première valeur d'incrément (d (j)), l'une au moins des mémoires FIFO (c (j, i)) étant associée en outre à une seconde valeur d'incrément (d (i)),
b. désigner, parmi lesdites mémoires FIFO, une mémoire FIFO dont l'identifiant-utilisateur premier sortant est le "prochain à servir" par la ressource, cette désignation s'effectuant en fonction de premières conditions qui comprennent l'ordre des échéances des utilisateurs premiers sortants,
c. recycler l'identifiant-utilisateur en ré-orientant cet identifiant-utilisateur dans l'une des FIFO, en fonction de secondes conditions, qui comprennent une comparaison entre la seconde valeur d'incrément de la FIFO où va l'utilisateur et la première valeur d'incrément de la FIFO d'où provient l'utilisateur, et
d. augmenter l'échéance d'un utilisateur recyclé de la première valeur d'incrément de la FIFO où se trouve cet utilisateur.

**9.** Procédé d'ordonnancement selon la revendication 8, **caractérisé en ce que** l'étape b. comprend une pré-sélection entre les utilisateurs premiers sortants de deux FIFO, au moins ces deux FIFO ayant la même première valeur d'incrément.

**10.** Procédé d'ordonnancement selon les revendications 8 et 9, **caractérisé en ce que** au moins deux des FIFO de l'étape b. ayant la même première valeur d'incrément ont des secondes valeurs d'incrément différentes.

**11.** Procédé d'ordonnancement selon les revendications 8 à 10, **caractérisé en ce que** les première conditions de l'étape b. comprennent le fait de déterminer, pour chaque groupe de mémoires FIFO ayant la même première valeur d'incrément, une échéance minimale parmi les échéances (E (u)) des utilisateurs premiers sortants des mémoires FIFO ayant la même première valeur d'incrément et de désigner une mémoire FIFO correspondant d'une part à une échéance inférieure à une valeur globale (V) attribuée à l'ordonnanceur et d'autre part à l'échéance minimale parmi les échéances minimales des groupes de mémoires FIFO ayant la même première valeur d'incrément.

**12.** Procédé d'ordonnancement selon les revendications 8 et 11, **caractérisé en ce que** les secondes conditions de l'étape c. comprennent la vérification de l'égalité entre la seconde valeur d'incrément de la FIFO où va l'utilisateur et la première valeur d'incrément de la FIFO d'où provient l'utilisateur.

**13.** Procédé d'ordonnancement selon l'une des revendications 8 à 12, **caractérisé en ce que** l'étape a. comprend une FIFO spécifique pour stocker un identifiant utilisateur entrant.

**14.** Procédé d'ordonnancement selon la revendication 13, **caractérisé en ce que** l'étape a. comprend en outre lors de l'entrée d'un utilisateur, de placer l'identifiant utilisateur correspondant dans une mémoire FIFO, possédant une première valeur d'incrément qui correspond à un paramètre lié au besoin relatif de ressource par l'utilisateur entrant.

**15.** Système informatique comprenant un ordonnanceur selon l'une des revendications 1 à 7.

**16.** Système informatique selon la revendication 15, **caractérisé en ce qu'**il comprend un équipement de télécommunication.

**17.** Module logiciel réalisant les fonctions de :

- stocker des quantités en mémoire ;
- stocker des identifiants-utilisateurs dans des mémoires de type FIFO ;
- désigner l'une des mémoires FIFO ;
- recycler l'identifiant-utilisateur dans l'une des FIFO ;
- augmenter l'échéance d'un utilisateur recyclé ;
- associer une seconde valeur d'incrément à au moins l'une des mémoires FIFO ;
- ré-orienter l'identifiant d'un utilisateur servi ;
- comparer des valeurs ;

utilisées dans l'ordonnanceur selon la revendication 1.

**18.** Module logiciel selon la revendication 17, réalisant en outre les fonctions de :

- déterminer une échéance minimale ;
- vérifier l'égalité entre deux valeurs d'incréments ;

utilisées dans l'ordonnanceur selon l'une des revendications 2 à 7.

**19.** Module logiciel réalisant les étapes du procédé selon l'une des revendications 8 à 14.

**Claims**

**1.** Scheduler for the sharing of a resource, of the type comprising:

- a memory capable of storing, for users, respective order quantities, called waiting times (E(u)),
- memories of FIFO type, each associated with a value, called first increment value (d(j)), for storing user-identifiers, and
- a management unit (21), capable:

* of designating one of the FIFO memories, of which the leaving first user-identifier is the "next to be served" by the resource, this designation taking place in accordance with first conditions which include the order of the waiting times of the leaving first users,
* of recycling the user-identifier into one of the FIFOs, and
* of increasing the waiting time of a recycled user by the first increment value of the FIFO where this user is located,

**characterized:**

- **in that** at least one of the FIFO memories (c(j, i) is also associated with a second increment value (d(i)), and
- **in that** the management unit (21) comprises a unit (61) taking recycling decisions, capable, after service of a user, of redirecting the identifier of this user to one of the FIFOs, in accordance with second conditions, which include a comparison between the second increment value of the FIFO where the user is going and the first increment value of the FIFO from which the user is coming.

**2.** Scheduler according to claim 1, **characterized in that** it comprises at least two FIFOs (c(j,l)), c(j,i) having the same first increment value (d(j)) and **in that** the management unit (21) comprises a unit (62) for pre-selection between the first users leaving these FIFOs having the same first increment value.

**3.** Scheduler according to claim 2, **characterized in that** at least two of the FIFOs (c (j,l), c (j, i)) having the same first increment value have different second increment values (d(l), d(i)).

**4.** Scheduler according to one of claims 1 to 4, **characterized in that** the first predetermined conditions include the determination, for each group of FIFO memories having the same first increment value, of a minimum waiting time among the waiting times (E(u)) of the first users leaving FIFO memories having the same first increment value and the designation of a FIFO memory corresponding on the one hand to a smaller waiting time to a global value (V) allocated to the scheduler and on the other hand to the minimum waiting time among the minimum waiting times of the groups of FIFO memories having the same first increment value.

**5.** Scheduler according to one of claims 1 to 4, **characterized in that** the second predetermined conditions include the verification of the equality between the second increment value of the FIFO where the user is going and the first increment value of the FIFO from where the user is coming.

**6.** Scheduler according to one of the previous claims, **characterized in that** it comprises a specific FIFO (c(j,0)) for storing an entering user identifier.

**7.** Scheduler according to claim 6, **characterized in that** it also comprises an entry decision unit, capable of placing a user identifier in a FIFO memory, having a first increment value which corresponds to a parameter linked to the relative resource requirement by the entering user.

**8.** Scheduling process for the sharing of a resource, **characterized in that** it comprises the following steps:

a. the storage of user-identifiers in FIFO memories each associated with a value, called first increment value (d(j)), at least one of the FIFO memories (c(j,i) also being associated with a second increment value (d(i)),
b. the designation, among the said FIFO memories, of a FIFO memory of which the leaving first user-identifier is the "next to be served" by the resource, this designation taking place in accordance with first conditions which include the order of the waiting times of the leaving first users,
c. the recycling of the user-identifier, redirecting this user-identifier into one of the FIFOs, in accordance with second conditions, which include a comparison between the second increment value of the FIFO where the user is going and the first increment value of the FIFO from which the user is coming, and
d. the increasing of the waiting time of a recycled user by the first increment value of the FIFO where this user is located.

**9.** Scheduling process according to claim 8, **characterized in that** step b. comprises a pre-selection between the leaving first users of two FIFOs, at least these two FIFOs having the same first increment value.

**10.** Scheduling process according to claims 8 and 9, **characterized in that** at least two of the FIFOs of step b. having the same first increment value have different second increment values.

**11.** Scheduling process according to one of claims 8 to 10, **characterized in that** the first conditions of step b. include the determination, for each group of FIFO memories having the same first increment value, of a minimum waiting time among the waiting times (E(u)) of the first users leaving FIFO memories having the same first increment value and the designation of a FIFO memory corresponding on the one hand to a waiting time smaller than a global value (V) allocated to the scheduler and on the other hand to the minimum waiting time among the minimum waiting times of the groups of FIFO memories having the same first increment value.

**12.** Scheduling process according to claims 8 and 11, **characterized in that** the second conditions of step c. include the verification of the equality between the second increment value of the FIFO where the user is going and the first increment value of the FIFO from where the user is coming.

**13.** Scheduling process according to one of claims 8 to 12, **characterized in that** step a. comprises a specific FIFO for storing an entering user identifier.

**14.** Scheduling process according to claim 13, **characterized in that** step a. also comprises, upon the entry of a user, the placing of the corresponding user identifier in a FIFO memory, having a first increment value which corresponds to a parameter linked to the relative resource requirement by the entering user.

**15.** Computer system comprising a scheduler according to one of claims 1 to 7.

**16.** Computer system according to claim 15, **characterized in that** it comprises an item of telecommunications equipment.

**17.** A software module performing the functions of:

- storing quantities in memory;
- storing user identifiers in FIFO-type memories;
- designating one of the FIFO memories;
- recycling the user identifier in one of the FIFO memories;
- increasing the waiting time for a recycled user;
- associating a second increment value with at least one of the FIFO memories;
- re-orienting the user identifier of a user which has been serviced;
- comparing values;

used in the scheduler according to claim 1.

**18.** A software module according to claim 17, further performing the functions of:

- determining a minimum waiting time;
- checking whether two increment values are identical;

used in the scheduler according to one of claims 2 to 7.

**19.** A software module performing the steps of the process according to one of claims 8 to 14.


**Patentansprüche**

**1.** Scheduler zum Verteilen einer Ressource, umfassend:

- einen Speicher, der für Benutzer jeweilige Anforderungsmengen, Schlussfristen (E(u)) genannt, speichern kann,
- Speicher des Typs FIFO, die jeweils mit einem Wert, erster Inkrementwert (d(j)) genannt, verbunden sind, um Benutzeridentifikatoren zu speichern, und
- ein Verwaltungselement (21), das in der Lage ist:

  * einen der FIFO-Speicher zu bezeichnen, dessen als erster ausgehender Benutzeridentifikator der von der Ressource "als nächstes zu bedienende" ist, wobei diese Bezeichnung in Abhängigkeit von ersten Bedingungen erfolgt, die die Reihenfolge der Schlussfristen der als erste ausgehenden Benutzer umfassen,
  * den Benutzeridentifikator in einem der FIFO wiederzuverwerten,
  * die Schlussfrist eines wiederverwerteten Benutzers um den ersten Inkrementwert des FIFO, in dem sich dieser Benutzer befindet, zu erhöhen,

  **dadurch gekennzeichnet, dass**
  - mindestens einer der FIFO-Speicher (c(j,i)) ferner mit einem zweiten Inkrementwert (d(i)) verbunden ist, und
  - das Verwaltungselement (21) ein Element zur Entscheidung über die Wiederverwertung (61) umfasst, das in der Lage ist, nach Bedienung eines Benutzers den Identifikator dieses Benutzers zu einem der FIFO zurück zu orientieren, in Abhängigkeit von zweiten Bedingungen, die einen Vergleich zwischen dem zweiten Inkrementwert des FIFO, wohin der Benutzer geht, und dem ersten Inkrementwert des FIFO, von wo der Benutzer kommt, umfassen.

**2.** Scheduler nach Anspruch 1, **dadurch gekennzeichnet, dass** er mindestens zwei FIFO (c(j,l),c(j,i)) umfasst, die denselben ersten Inkrementwert (d(j)) haben, und dass das Verwaltungselement (21) ein Element (62) zur Vorselektion zwischen den als erste ausgehenden Benutzern dieser FIFO mit demselben ersten Inkrementwert umfasst.

**3.** Scheduler nach Anspruch 2, **dadurch gekennzeichnet, dass** mindestens zwei der FIFO (c(j,l),c(j,i)), die denselben ersten Inkrementwert haben, unterschiedliche zweite Inkrementwerte (d(l),d(i)) haben.

**4.** Scheduler nach einem der Ansprüche 1 bis 4, **dadurch gekennzeichnet, dass** die ersten vorbestimmten Bedingungen die Tatsache umfassen, dass für jede Gruppe von FIFO Speichern, die denselben ersten Inkrementwert haben, eine Mindestschlussfrist unter den Schlussfristen (E(u)) der als erste ausgehenden Benutzer der FIFO-Speicher mit demselben ersten Inkrementwert bestimmt wird, und dass ein FIFO-Speicher bezeichnet wird, der einerseits einer Schlussfrist unter einem Gesamtwert (V), der dem Scheduler zugeteilt ist, und andererseits der Mindestschlussfrist unter den Mindestschlussfristen der Gruppen von FIFO-Speichern, die denselben ersten Inkrementwert haben, entspricht.

**5.** Scheduler nach einem der Ansprüche 1 bis 4, **dadurch gekennzeichnet, dass** die zweiten vorbestimmten Bedingungen die Überprüfung der Gleichheit zwischen dem zweiten Inkrementwert des FIFO, wohin der Benutzer geht, und dem ersten Inkrementwert des FIFO, woher der Benutzer kommt, umfassen.

**6.** Scheduler nach einem der vorhergehenden Ansprüche, **dadurch gekennzeichnet, dass** er einen spezifischen FIFO (c(j,O)) umfasst, um einen eingehenden Benutzeridentifikator zu speichern.

**7.** Scheduler nach Anspruch 6, **dadurch gekennzeichnet, dass** er ferner ein Eingangsentscheidungselement umfasst, das in der Lage ist, einen Benutzeridentifikator in einem FIFO-Speicher anzuordnen, der einen ersten Inkrementwert besitzt, der einem Parameter entspricht, der mit dem relativen Ressourcenbedarf durch den eingehenden Benutzer verbunden ist.

**8.** Scheduling-Verfahren zum Verteilen einer Ressource, **dadurch gekennzeichnet, dass** es die folgenden Schritte umfasst:

a. Speichern der Benutzeridentifikatoren in FIFO-Speichern, die jeweils mit einem Wert, erster Inkrementwert (d(j)) genannt, verbunden sind, wobei mindestens einer der FIFO-Speicher (c(j,i)) ferner mit einem zweiten Inkrementwert (d(i)) verbunden ist,
b. unter den FIFO-Speichern Bezeichnung eines FIFO-Speichers, dessen erster ausgehender Benutzeridentifikator der von der Ressource "als nächstes zu bedienende" ist, wobei diese Bezeichnung in Abhängigkeit von ersten Bedingungen erfolgt, die die Reihenfolge der Schlussfristen der ersten ausgehenden Benutzer umfassen,
c. Wiederverwerten des Benutzeridentifikators durch Rückorientierung dieses Benutzeridentifikators in einen der FIFO in Abhängigkeit von zweiten Bedingungen, die einen Vergleich zwischen dem zweiten Inkrementwert des FIFO, wohin der Benutzer geht, und dem ersten Inkrementwert des FIFO, woher der Benutzer kommt, umfassen, und
d. Erhöhung der Schlussfrist eines wiederhergestellten Benutzers um den ersten Inkrementwert des FIFO, in dem sich dieser Benutzer befindet.

**9.** Scheduling-Verfahren nach Anspruch 8, **dadurch gekennzeichnet, dass** der Schritt b. eine Vorselektion zwischen den ersten ausgehenden Benutzern von zwei FIFO umfasst, wobei mindestens diese beiden FIFO denselben ersten Inkrementwert haben.

**10.** Scheduling-Verfahren nach den Ansprüchen 8 und 9, **dadurch gekennzeichnet, dass** mindestens zwei der FIFO aus Schritt b., die denselben ersten Inkrementwert haben, unterschiedliche zweite Inkrementwerte haben.

**11.** Scheduling-Verfahren nach den Ansprüchen 8 bis 10, **dadurch gekennzeichnet, dass** die ersten Bedingungen aus Schritt b. die Tatsache umfassen, für jede Gruppe von FIFO-Speichern, die denselben ersten Inkrementwert haben, eine Mindestschlussfrist unter den Schlussfristen (E(u)) der ersten ausgehenden Benutzer der FIFO-Speicher, die denselben ersten Inkrementwert haben, zu bestimmen und einen FIFO-Speicher zu bezeichnen, der einerseits einer Schlussfrist unter einem Gesamtwert (V), der dem Scheduler zugeteilt ist, und andererseits der Mindestschlussfrist unter den Mindestschlussfristen der Gruppen von FIFO-Speichern, die denselben ersten Inkrementwert haben, entspricht.

**12.** Scheduling-Verfahren nach den Ansprüchen 8 und 11, **dadurch gekennzeichnet, dass** die zweiten Bedingungen aus Schritt c. die Überprüfung der Gleichheit zwischen dem zweiten Inkrementwert des FIFO, wohin der Benutzer geht, und dem ersten Inkrementwert des FIFO, woher der Benutzer kommt, umfassen.

**13.** Scheduling-Verfahren nach einem der Ansprüche 8 bis 12, **dadurch gekennzeichnet, dass** Schritt a. einen spezifischen FIFO umfasst, um einen eingehenden Benutzeridentifikator zu speichern.

**14.** Scheduling-Verfahren nach Anspruch 13, **dadurch gekennzeichnet, dass** Schritt a. ferner beim Eingehen eines Benutzers die Anordnung des entsprechenden Benutzeridentifikators in einem Speicher FIFO umfasst, der einen ersten Inkrementwert aufweist, der einem Parameter entspricht, der mit dem relativen Ressourcenbedarf durch den eingehenden Benutzer verbunden ist.

**15.** Informatiksystem, umfassend einen Scheduler nach einem der Ansprüche 1 bis 7.

**16.** Informatiksystem nach Anspruch 15, **dadurch gekennzeichnet, dass** es eine Telekommunikationsausrüstung umfasst.

**17.** Software-Modul, das folgende Funktionen erfüllt:

      - Speichern von Mengen im Speicher;
      - Speichern von Benutzeridentifikatoren in Speichern des Typs FIFO;
      - Bezeichnen eines der FIFO-Speicher;
      - Wiederverwerten des Benutzeridentifikators in einem der FIFO;
      - Erhöhen der Schlussfrist eines wiederverwerteten Benutzers;
      - Verbinden eines zweiten Inkrementwerts mit mindestens einem der FIFO-Speicher;
      - Rückorientieren des Identifikators eines bedienten Benutzers;
      - Vergleichen der Werte;

die in dem Scheduler nach Anspruch 1 verwendet werden.

**18.** Software-Modul nach Anspruch 17, das ferner folgende Funktionen erfüllt:

      - Bestimmen einer Mindestschlussfrist;
      - Überprüfen der Gleichheit zwischen zwei Inkrementwerten;

die in dem Scheduler nach einem der Ansprüche 2 bis 7 verwendet werden.

**19.** Software-Modul, das die Schritte des Verfahrens nach einem der Ansprüche 8 bis 14 ausführt.

FIG.1

FIG.2

UTILISATEUR

E (u)

$C_a(u)$   $C_p(u)$

$Q_a(u)$   $Q_p(u)$

$Q(u, c(i))$

$\omega(u)$   $\omega_p(u)$

FIG.3

CLASSE j : $C(j)$, $d(j)$, $E(j)$

$E_{min-an}(j)$, $e(j)$

| FiFO 0 | | FiFO i | | FiFO m |
|--------|---|--------|---|--------|
| | ... | | ... | |

$c(j)$

$c(j,m)$

$c(j,0)$   $c(j,i)$

CLASSE i

| FiFO 0 | | FiFO m |
|--------|---|--------|
| | | |

$c(i)$

$c(i,m)$

$c(i,0)$

$V$, $\omega_{max}$, $Q_{max}$, $\omega S$, $nbQ$, $RQ$

FIG.4

Initialisation du gestionnaire

$$Q_{min} = Q_{max} / RQ^{(nbQ-1)}$$ — 102

$$m \geqslant \frac{\omega_{max}}{\omega_{min}} + nbQ$$ — 104

$V \longleftarrow 0$
$\omega S \longleftarrow 0$
$C(i,0) \longleftarrow \text{"vide"}$
$C(j,i) \longleftarrow \text{"vide"}$
— 106

FIN

FIG.5

Définition, pour la charge d'un utilisateur, de quantités de service

$C(i) : d(i) \leqslant Q_{max}/\omega(u)$
$d_{max}(u) \longleftarrow d(i)$
— 112

$Q_{max}(u) \longleftarrow \omega(u) \times d_{max}(u)$ — 114

$Q(u) \in \left\{ Q_{max}(u)/RQ^k, k \leqslant nbQ \right\}$
Liste des $Q(u,c(i))$
— 116

FIG.6

FIN

Activation d'un utilisateur

$$WS \longleftarrow WS + W(u_{ac})$$ —122

$$C(i) : Q(u) = Q(u_{ac})$$ —124

$$E(u_{ac}) = V + d(i)$$ —126

$$u_{ac} \text{ en fin de } C(i,0)$$ —128

—130

$C(i,0) \neq \text{"Vide"}$

et $e(u) = \text{"Vrai"}$

avec $u : E(u) = E_{min\cdot an}^{(C(i))}$

0

N

$e(C(i)) \longleftarrow \text{"Vrai"}$

$E(C(i)) \longleftarrow E(u_{ac})$

—131

FIN

FIG.7

Sélection du prochain utilisateur

Appel de la ressource ⌐140

142

$\omega S = 0$ ? — 0

N

$$c(i) : \begin{cases} e(c(i)) = \text{"Vrai"} \\ E(c(i)) = \min E(c) \end{cases}$$
et
$u_S \in c(i)$ avec
$$u_S : \begin{cases} e(u_S) = \text{"Vrai"} \\ E(u_S) = \min E(u) \end{cases}$$
143

$V = V + Qp(u_S, c(i)) / \omega S$ — 144

Select $(u_S, Qp) \mapsto \omega a, Qa$ — 146

Dequeue $(c(j,i))$ — 147

$Qa(u_S) = 0$ ? — 0 → $\omega S \leftarrow \omega S - \omega_p(u)$   152

148

N

$\omega S \leftarrow \omega S - \omega_a(u) + \omega_p(u)$ — 149

$\xrightarrow{u_S} Qa(u, c(j,i))$ — 150

$\omega S = 0$ ? — 0 →

N   154

156 — $E(u) = \min E(u_{an})$ — N

O

158 — $E_{min \cdot an}(c(j)) \leftarrow E(u)$

160 — TO FIGURE 9

0 — $Qa(u) = 0$ ? — 162

N

FIN

FIG.8

FROM STEP 160

200 — $u \in A$ et $u_p \in A : E(u_p) < V$ — N

O

202 — $E(u_p) \longleftarrow E(u_p) + d(i)$
$e(u_p) \longleftarrow$ "Vrai"

204 — $C(i,0) \neq$ "vide" et/ou $e(u_p)=$ "vrai" — N

O

206 — $e(c(i)) \longleftarrow$ "Vrai" et
$E(c(i)) \longleftarrow E_{min}(c(i))$

$e(c(i)) \longleftarrow$ "faux"

212 — Pour tout u
Si $E(c(f)) \leqslant V$ alors $e(c(f)) \longleftarrow$ "Vrai"

214 — Aucun $e(c(f)) =$ "Vrai" ? — N

O

218 — $c(f) : min (E_{min-an}(G) - E_{min-an}(c(f))$

220 — $V \longleftarrow E_{min-an}(G)$

TO STEP 162 OF FIGURE 8

FIG.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 98955731 A

**Littérature non-brevet citée dans la description**

- **R. Després ; A. Bache.** Algorithme d'allocation d'une unité centrale pour calculateurs exploités en temps partagé. *Annales des communications,* 1972, 19

- **R. Després.** A packet switching network with graceful saturated operation. *International Conference and Computer Communications,* 1972, 345